# EUROPÄISCHE PATENTSCHRIFT

(11) **EP 1 034 445 B1**
(45) Veröffentlichungstag und Bekanntmachung des Hinweises auf die Patenterteilung: **05.02.2003**
(21) Anmeldenummer: 98962193.3
(22) Anmeldetag: 23.10.1998
(51) Int. Cl.: G02B 6/38

(54) **OPTISCHES VERBINDERSYSTEM**
OPTICAL CONNECTION SYSTEM
SYSTEME CONNECTEUR OPTIQUE

(30) Priorität: 28.11.1997 DE 19754773
(43) Veröffentlichungstag der Anmeldung: 13.09.2000
(73) Patentinhaber: Infineon Technologies AG, 81669 München (DE)
(72) Erfinder: WEIGEL, Hans-Dieter, D-14548 Caputh (DE)
(74) Vertreter: Müller, Wolfram Hubertus, Dipl.-Phys.
(86) Internationale Anmeldenummer: DE9803169
(87) Internationale Veröffentlichungsnummer: WO99028774

(56) Entgegenhaltungen:
- EP-A- 0 505 197
- EP-A- 0 807 837
- WO-A-97/34176
- DE-C- 19 539 549
- US-A- 5 138 680

## Beschreibung

Die Erfindung liegt auf dem Gebiet der mechanischen Verbindungsmittel für Lichtleiter und ist bei der konstruktiven Gestaltung mehrkanaliger, zusammensteckbarer Mehrfachverbinder anzuwenden, bei denen die Verbindergehäuse mit Ausrichthilfen für die gegenseitige Zuordnung der in dem Verbindergehäuse angeordneten Einzelsteckverbinder versehen sind.

Bei Mehrfachverbindern dieser Art sind die Einzelsteckverbinder, die auch als optische Endstücke oder Ferrulen bezeichnet werden, in dem gemeinsamen Verbindergehäuse schwimmend gelagert. Die Einzelsteckverbinder schließen jeweils einen oder mehrere Lichtwellenleiter endseitig derart ab, daß die Lichtwellenleiter an einer zur optischen Kopplung mit einem gegenüberliegenden Kopplungspartner geeigneten Kopplungsstirnfläche enden. Im Rahmen der vorliegenden Erfindung ist unter einem Lichtwellenleiter ein zur Führung und Weiterleitung eines optischen Signals geeigneter Leiter zu verstehen, wie beispielsweise konfektionierte Lichtwellenleiterkabel, Lichtwellenleiterbändchen oder auf einem Substrat ausgebildete optische Leiter (sog. "wafe guides"). Die Einzelsteckverbinder und damit die von ihnen aufgenommenen Lichtwellenleiterenden (Kopplungspartner) müssen hochpräzise zueinander positioniert sein. Dazu sind die Einzelsteckverbinder üblicherweise mit korrespondierenden Ausrichtelementen versehen; die Ausrichtelemente bestehen z.B. aus Zentrierstiften, die sich aus der Kopplungsstirnseite des einen Einzelsteckverbinders in Steckrichtung vorauserstrecken und aus komplementären Ausrichtelementen in Form von auf die Zentrierstifte abgestimmte Bohrungen beim anderen Einzelsteckverbinder. Diese Ausrichtmittel sind wegen der insgesamt vergleichsweise geringen Baudimensionen mechanisch nur gering belastbar und erlauben eine Ausrichtung nur dann, wenn eine ausreichende Vorausrichtung der Kopplungspartner zueinander gewährleistet ist.

Bei einem bekannten optischen Verbindersystem sind an den beiden Verbindergehäusen Ausrichthilfen unterschiedlicher Formgebung vorgesehenen, die beim Zusammenstecken der Mehrfachverbinder die Verbindergehäuse unmittelbar zueinander ausrichten, bevor die Ausrichtelemente der Einzelsteckverbinder unter Feinausrichtung der zu koppelnden Einzelsteckverbinder mit den Ausrichtelementen der Einzelsteckverbinder des gegenüberliegenden Mehrfachverbinders in Kooperation treten. Hierbei ist das eine Verbindergehäuse über Verriegelungselemente in einer Führungsbuchse lösbar mechanisch fixiert, die der Aufnahme des anderen Verbindergehäuses dient, wobei das zweite Verbindergehäuse mittels federnder Ausrichthilfen mit dem ersten Verbindergehäuse verrastet (EP 0 807 837 A1).

Bei einem anderen bekannten optischen Verbindersystem werden die beiden Verbindergehäuse durch Reibungskräfte zwischen Ausrichthilfen, die in Achsrichtung des Verbindersystems relativ lang und an beiden Verbindergehäusen unterschiedlich ausgebildet sind, zusammengehalten (WO 97/34176 A1).

Bei einem weiteren bekannten optischen Verbindersystem sind die beiden mit unterschiedlichen Ausrichthilfen versehenen Verbindergehäuse in eine Buchse eingesteckt, die der Vorausrichtung der Verbindergehäuse dient und die mit dem einen Verbindergehäuse verrastet (DE 19539549 C1). Beim Zusammenstecken der beiden Verbindergehäuse in der Buchse wirken sich die Teiltoleranzen sowohl der Buchse als auch der Verbindergehäuse sowie die vorzusehenden Spielpassungen dieser Elemente additiv und im Hinblick auf die Vorausrichtung der Ausrichtelemente der Einzelsteckverbinder nachteilig aus.

Ausgehend von einem optischen Verbindersystem mit den Merkmalen des Oberbegriffs des Anspruchs 1 (EP 0 807 837 A1) liegt der Erfindung die Aufgabe zugrunde, das Verbindersystem so auszugestalten, daß durch Entkopplung der gegenseitigen Ausrichtung der Verbindergehäuse von deren gegenseitigen Fixierung eine höhere Präzision bei der gegenseitigen Ausrichtung erreicht wird.

Diese Aufgabe wird erfindungsgemäß durch die Merkmale des Anspruchs 1 gelöst. Insbesondere sind die beiden Verbindergehäuse gleichartig gestaltet und demzufolge das eine Verbindergehäuse mit den gleichen Ausrichthilfen wie das andere Verbindergehäuse versehen, wobei die Ausrichthilfen des einen Mehrfachverbinders bei Drehung dieses Mehfachverbinders gegenüber dem anderen, gleichartig gestalteten Mehrfachverbinder um 180° um seine Längsachse mit den Ausrichthilfen des anderen Mehrfachverbinders kooperieren. Die beiden Verbindergehäuse sind mittels einer beide Verbindergehäuse aufnehmenden Kupplungsbuchse zueinander axial fixiert.

Mit dem Begriff Ausrichthilfe werden im Rahmen der Erfindung mechanische Elemente bezeichnet, die durch ihre Gestalt und Form geeignet sind, zur gegenseitigen Vorausrichtung der Verbindergehäuse beizutragen; insbesondere sind als Ausrichthilfe Stege, Nut/Feder-Kombinationen, Führungsflächen oder Zapfen geeignet.

Ein wesentlicher Vorteil des neuen Verbindersystems besteht darin, daß durch die Ausbildung gleicher Ausrichthilfen an beiden Verbindergehäusen deren Toleranzen und notwendige Spielpassungen geringer sind, so daß die Ausrichtelemente in einem vergleichsweise gering bemessenen Toleranzbereich zueinander vorausgerichtet sind. Beim weiteren Zusammensteckvorgang sind nur noch geringe Ausrichtbewegungen der zu koppelnden Einzelsteckverbinder erforderlich. Dadurch erhöht sich deren steckzyklenabhängige Lebensdauer signifikant und die Reproduzierbarkeit der optischen Kopplungsgüte (Kopplungswirkungsgrad) wird wesentlich erhöht. Die Kupplungsbuchse übernimmt dabei lediglich Aufgaben der mechanischen Fixierung nach Abschluß des Zusammensteckvorgangs, wobei aber Fertigungstoleranzen der Kupplungsbuchse nicht auf die gegenseitige Positionierung der Einzelsteckverbinder durchschlagen.

Eine fertigungstechnisch und hinsichtlich der Handhabung bevorzugte Ausgestaltung des Verbindersystems, die für einen schrittweisen Vorausrichtungsprozeß während des Zusammensteckvorgangs und im Hinblick auf die Verwendung gleichartig gestalteter Verbindergehäuse vorteilhaft ist, sieht vor, daß die Ausrichthilfen von nasenartigen Vorsprüngen am stirnseitigen Rand des Verbindergehäuses gebildet sind, wobei die Vorsprünge in Steckrichtung gesehen unterschiedlich weit reichen und wobei die weiter vorstehenden Vorsprünge des einen Verbindergehäuses mit den weiter zurückgesetzten Vorsprüngen des anderen Verbindergehäuses kooperieren. Die über den stirnseitigen Rand des Verbindergehäuses vorausstehenden Vorsprünge können in vorteilhafter Weise neben ihrer Ausrichtfunktion einen zuverlässigen Schutz der empfindlichen Stirnseiten und Ausrichtelemente der Einzelsteckverbinder bilden.

Die angesprochene Schutzfunktion der Ausrichthilfen wird nach einer vorteilhaften Ausgestaltung der Erfindung dadurch weiter gestärkt, daß die Ausrichthilfen an den Längskanten und im mittleren Bereich der Ober- und Unterseite des Verbindergehäuses angeordnet sind.

Für die Handhabung und im Hinblick auf eine möglichst geringe Anzahl von Ausrichtmitteln ist es besonders vorteilhaft, wenn zumindest ein nasenartiger Vorsprung im Zusammenspiel mit einem gegenüberliegenden Vorsprung eine Begrenzung der Bewegung des Verbindergehäuses in zumindest zwei zur Steckrichtung senkrechten Freiheitsgraden bewirkt.

Die Erfindung wird nachfolgend anhand eines figürlich dargestellten Ausführungsbeispiels weiter erläutert.

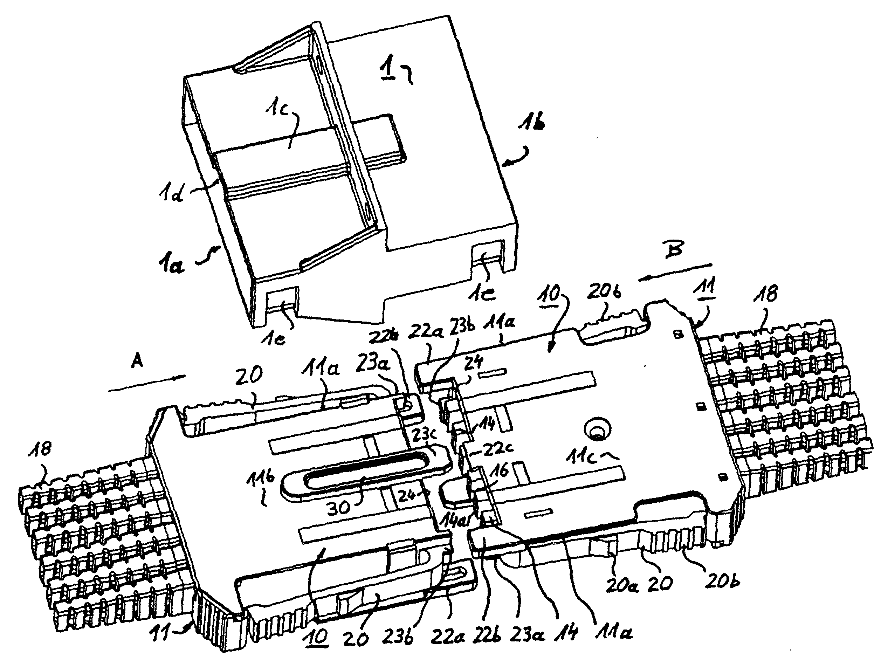

Die Figur zeigt ein optisches Verbindersystem mit einer Kupplungsbuchse 1 und zwei Mehrfachverbindern 10. Die Mehrfachverbinder sind im wesentlichen gleichartig aufgebaut und lediglich in ihrer funktionsgemäßen Lage - d. h. um 180° um die Längsachse gedreht - dargestellt. Es werden dennoch nachfolgend für entsprechende Elemente der beiden Mehrfachverbinder dieselben Bezugszeichen verwendet. Die Mehrfachverbinder umfassen jeweils ein Verbindergehäuse 11, mit dem sie von jeweils eine der offenen Seiten 1a, 1b der Kupplungsbuchse in Steckrichtung A bzw. B einsteckbar sind. Tatsächlich würde also die Kupplungsbuchse 1 die Mehrfachsteckverbinder im dargestellten Zustand bereits weitestgehend aufgenommen haben und die Verbindergehäuse entsprechend umgeben. Nur aus Gründen der klaren Darstellung ist die Kupplungsbuchse oberhalb der Mehrfachsteckverbinder separat dargestellt.

In jedem Verbindergehäuse 11 ist eine Mehrzahl von beispielsweise sechs an sich bekannten Einzelsteckverbindern 14 schwimmend gelagert. Die Einzelsteckverbinder können als an sich bekannte sog. MT-Ferrulen ausgebildet sein und weisen an ihrer jeweiligen Kopplungsstirnseite 16 austretende bzw. beginnende Ausrichtelemente auf. Die Ausrichtelemente 14a sind in bekannter Weise (EP 0 712 015 A2) z. B. als sich in Steckrichtung A, B über die Kopplungsstirnfläche 16 erstreckende Zentrierstifte bzw. korrespondierende, an der Stirnfläche 16 beginnende Zentrierbohrungen ausgebildet. Diese Ausrichtelemente dienen der Ausrichtung eines im rechten Gehäuse 11 gelagerten Einzelsteckverbinders 14 bezüglich eines entsprechenden, in dem linken Gehäuse 11 gelagerten korrespondierenden Einzelsteckverbinders. Zur Herstellung qualitativ hochwertiger optischer Kopplungen der nur andeutungsweise dargestellten, von dem jeweiligen Einzelsteckverbinder 14 aufgenommenen, an der Stirnfläche 16 endenden Lichtwellenleiter mit korrespondierenden Lichtwellenleiterenden (Kopplungspartner) des jeweils zugeordneten Einzelsteckverbinders des anderen Mehrfachsteckverbinders bedarf es einer hochpräzisen Ausrichtung der jeweiligen Kopplungspartner zueinander. Diese ist mit Hilfe der bekannten Ausrichtelemente nur dann zu gewährleisten, wenn die Ausrichtelemente während des Steckvorganges in einem vergleichsweise gering bemessenen Toleranzbereich zueinander vorausgerichtet sind.

Die Verbindergehäuse 11 weisen daher nachfolgend näher erläuterte Ausrichthilfen auf. Im übrigen sind von den Verbindergehäusen abgehende Knickschutztüllen 18 der an den Einzelsteckverbindern endenden und rückwärtig abgehenden Lichtwellenleiterkabel gezeigt. An beiden Schmalseiten der Mehrfachsteckverbindergehäuse 11 sind federnde Verriegelungshebel 20 mit Verriegelungsnasen 20a und Betätigungsflächen 20b angeordnet, die im eingesteckten Zustand in Ausnehmungen 1e der Kupplungsbuchse 1 verrasten.

An den Längskanten 11a der Verbindergehäuse 11 und im mittleren Bereich der Oberseite 11b bzw. Unterseite 11c sind Ausrichthilfen in Form von Vorsprüngen 22a, 22b, 22c bzw. 23a, 23b, 23c ausgebildet. Die Vorsprünge sind vorteilhafterweise einstückig als Ansätze des Verbindergehäuses ausgeformt und bevorzugt in einem gemeinsamen Spritzgußvorgang erzeugt. Die Vorsprünge erstrecken sich über den stirnseitigen Rand 24 der Verbindergehäuse in Steckrichtung A bzw. B hinaus und reichen unterschiedlich weit. Die Vorsprünge 22a, 22b des rechten Verbindergehäuses 11 erstrecken sich mithin weiter in Richtung B als der auf der Unterseite 11c ausgebildete Vorsprung 22c. Entsprechend sind die an den Längskanten der Oberseite ausgebildeten Vorsprünge 23a, 23b kürzer bemessen als der auf der Oberseite zentral angeordnete Vorsprung 23c. Die Vorsprünge 23a bzw. 23b sind im Querschnitt als rechtwinkliges L ausgebildet und bewirken im Zusammenspiel mit dem jeweiligen gegenüberliegenden Vorsprung 22a bzw. 22b eine Beschneidung der Bewegungsfreiheit des Verbindergehäuses 11 in zwei zur Steckrichtung B senkrechten lateralen Freiheitsgraden. Der Vorsprung 22c kooperiert mit dem Vorsprung 23c und gelangt unter diesem in Anlage mit dem linken Verbindergehäuse 11.

In dem dargestellten Ausführungsbeispiel kooperieren also jeweils zwei weiter vorstehende Vorsprünge mit entsprechend weiter zurückgesetzten Vorsprüngen des gegenüberliegenden Verbindergehäuses. Die kooperierenden Ausrichtmittel (nasenartige Vorsprünge) der Verbindergehäuse bewirken unabhängig von der Toleranz und der Innenkontur der Kupplungsbuchse ein unmittelbares Vorausrichten der beiden Verbindergehäuse 11 zueinander, bevor die Ausrichtelemente 14a der Einzelsteckverbinder 14 unter gegenseitiger Feinausrichtung der jeweiligen Einzelsteckverbinder mit ihren komplementären kopplungspartnerseitigen Ausrichtelementen in Kooperation treten.

Die Anordnung der Vorsprünge bewirkt außerdem eine Vorpositionierung in allen zur Steckrichtung A, B lateralen Richtungen. Die über den Rand 24 hervorstehenden Vorsprünge dienen in Doppelfunktion zusätzlich zum Schutz der empfindlichen Kopplungsstirnseiten und Ausrichtelemente der Einzelsteckverbinder 14. Die nasenförmigen vorliegenden Vorsprünge ermöglichen außerdem, im mittleren Bereich der Kupplungsbuchse 1 eine in der Zeichnung nicht erkennbare gitterförmige Trennebene anzuordnen, die bei Verwendung von metallisiertem Kunststoff für die Kupplungsbuchse 1 elektrische Abschirmungsanforderungen zu erfüllen hilft. Die auf der Oberseite der Kupplungsbuchse erkennbare Ausformung 1c bildet eine innenseitige Nut 1d, die mit einem Steg 30 bzw. dem Vorsprung 23c des linken Verbindergehäuses zusammenwirkt. Durch die innenseitige Nut 1d auf der linken Seite der Kupplungsbuchse 1 und die entsprechende Ausbildung einer gleichen Nut auf der Unterseite in der rechten Seite der Kupplungsbuchse 1 ist eine lagerichtige, um 180° um die Längsachse gedrehte Einführung der beiden Mehrfachverbinder 10 in die Kupplungsbuchse 1 gewährleistet. Fehleinführungen oder Fehlsteckungen sind dadurch zuverlässig verhindert.

## Patentansprüche

1. Optisches Verbindersystem
mit zwei Mehrfachverbindern (10; 10) mit jeweils einem Verbindergehäuse (11) und mit mehreren, in dem Verbindergehäuse (11) schwimmend gelagerten Einzelsteckverbindern (14), sowie mit an den Verbindergehäusen (11) vorgesehenen Ausrichthilfen (22a, 22b, 22c; 23a, 23b, 23c), die beim Zusammenstecken der Mehrfachverbinder (10; 10) deren Verbindergehäuse (11) unmittelbar zueinander ausrichten, bevor die Ausrichtelemente (14a) der Einzelsteckverbinder (14) unter Feinausrichtung der zu koppelnden Einzelsteckverbinder (14) mit den Ausrichtelementen (14a) der Einzelsteckverbinder des gegenüberliegenden Mehrfachverbinders in Kooperation treten,
**dadurch gekennzeichnet, daß**
- das Verbindersystem eine Kopplungsbuchse (1) aufweist, die zur Aufnahme der beiden Verbindergehäuse (11) ausgebildet ist;
- die beiden Verbindergehäuse (11) gleichartig insofern gestaltet sind, als das eine Verbindergehäuse mit den gleichen Ausrichthilfen (22a, 22b, 22c; 23a, 23b, 23c) wie das andere Verbindergehäuse (11) versehen ist;
- die Ausrichthilfen der Verbindergehäuse (11) durch nasenartige Vorsprünge (22a, 22b, 22c; 23a, 23b, 23c) am stirnseitigen Rand (24) des jeweiligen Verbindergehäuses (11) gebildet sind, wobei jeweils eine Mehrzahl langer nasenartiger Vorsprünge (22a, 22b, 23c) und eine Mehrzahl demgegenüber kurzer nasenartiger Vorsprünge (23a, 23b, 22c) vorgesehen sind, und
- die Ausrichthilfen (22a, 22b, 22c; 23a, 23b, 23c) des einen Verbindergehäuses (11) derart ausgebildet sind, daß die im zusammengesteckten Zustand mit den Ausrichthilfen (22a, 22b, 22c; 23a, 23b, 23c) des anderen Verbindergehäuses (11) so kooperieren, daß jeweils die langen nasenartigen Vorsprünge (22a, 22b, 23c) des einen Verbindergehäuses (11) mit den kurzen nasenartigen Vorsprüngen (23a, 23b, 22c) des anderen Verbindergehäuses (11) kooperieren und umgekehrt, wobei im zusammengesteckten Zustand das eine Verbindergehäuse (11) um 180° bezüglich der gleichen Ausgangslage des anderen Verbindergehäuses (11) gedreht ist.

2. Verbindersystem nach Anspruch 1,
**dadurch gekennzeichnet, daß**
an jedem Verbindergehäuse drei lange nasenartige Vorsprünge (22a, 22b, 23c) und drei kurze nasenartige Vorsprünge (23a, 23b, 22c) vorgesehen sind, wobei jeweils zwei der Vorsprünge (22a, 22b, 23a, 23b) an einer Längskante (11a) des Verbindergehäuses und zwei nasenartige Vorsprünge (22c, 23c) im mittleren Bereich der Ober- und Unterseite (11b, 11c) des Verbindergehäuses (11) angeordnet sind.

3. Verbindersystem nach Anspruch 2,
**dadurch gekennzeichnet, daß**
die kurzen nasenartigen Vorsprünge (23a, 23b) an den Längskanten (11a) im Querschnitt als rechtwinkliges "L" ausgebildet sind.

4. Verbindersystem nach Anspruch 2 oder 3,
**dadurch gekennzeichnet, daß**
der lange nasenartige Vorsprung (23c) im mittleren Bereich (11b) des Verbindergehäuses gegenüber dem Verbindergehäuse (11) vorspringt und beim Einführen des Verbindergehäuses (11) mit einer Nut (1d) der Kupplungsbuchse (1) zusammenwirkt.

5. Verbindersystem nach mindestens einem der vorangehenden Ansprüche,
**dadurch gekennzeichnet, daß**
zumindest ein nasenartiger Vorsprung (23a, 23b) derart ausgebildet ist, daß er im Zusammenspiel dem jeweiligen gegenüberliegenden Vorsprung (22a, 22b) eine Begrenzung der Bewegung des Verbindergehäuses (11) in zumindest zwei zur Steckrichtung (A, B) senkrechten Freiheitsgraden bewirkt.

## Claims

1. Optical connector system
having two multiway connectors (10; 10) each having a connector housing (11) and having a number of individual plug connectors (14) which are mounted in a floating manner in the connector housing (11), and having alignment aids (22a, 22b, 22c; 23a, 23b, 23c), which are provided on the connector housings (11) and align the connector housing (11) of the multiway connectors (10; 10) directly with one another when the multiway connectors (10; 10) are mated, before the alignment elements (14a) of the individual plug connectors (14) start to cooperate, for fine alignment of the individual plug connectors (14) which are to be coupled, with the alignment elements (14a) of the individual plug connectors of the opposite multiway connector,
**characterized in that**
- the connector system has a coupling bush (1), which is designed to hold the two connector housings (11),
- the two connector housings (11) are designed to be identical to the extent that one connector housing is provided with the same alignment aids (22a, 22b, 22c; 23a, 23b, 23c) as the other connector housing (11);
- the alignment aids of the connector housings (11) are formed by tab-like projections ((22a, 22b, 22c; 23a, 23b, 23c) on the end edge (24) of the respective connector housing (11), with a number of long tab-like projections (22a, 22b, 23c) and a number of tab-like projections (23a, 23b, 22c) which are shorter than these tab-like projections (22a, 22b, 23c) being provided in each case, and
- the alignment aids (22a, 22b, 22c; 23a, 23b, 23c) of one connector housing (11) being designed such that, in the mating state, they cooperate with the alignment aids (22a, 22b, 22c; 23a, 23b, 23c) of the other connector housing (11), such that the long tab-like projections (22a, 22b, 23c) on one connector housing (11) in each case cooperate with the short tab-like projections (23a, 23b, 22c) on the other connector housing (11), and vice versa, and, in the mated state, one connector housing (11) being rotated through 180° with respect to the same initial position of the other connector housing (11).

2. Connector system according to Claim 1,
**characterized in that**
three long tab-like projections (22a, 22b, 23c) and three short tab-like projections (23a, 23b, 22c) are provided on each connector housing, with two of the projections (22a, 22b, 23a, 23b) in each case being arranged on one longitudinal edge (11a) of the connector housing, and two tab-like projections (22c, 23c) being arranged in the central region of the upper face and lower face (11b, 11c) of the connector housing (11).

3. Connector system according to Claim 2,
**characterized in that**
the short tab-like projections (23a, 23b) on the longitudinal edges (11a) are formed with a rectangular "L" cross section.

4. Connector system according to Claim 2 or 3,
**characterized in that**
the long tab-like projection (23c) in the central region (11b) of the connector housing projects beyond the connector housing (11) and, during insertion of the connector housing (11), interacts with a groove (1d) in the coupling bush (1).

5. The connector system according to one of the preceding claims,
**characterized in that**
at least one tab-like projection (23a, 23b) is designed in such a way that in cooperation with the respective opposite projection (22a, 22b) it produces a limit to the movement of the connector housing (11) in at least two degrees of freedom at right angles to the mating direction (A, B).

## Revendications

1. Système connecteur optique comportant deux connecteurs multiples (10 ;10) ayant chacun un boîtier (11) de connecteur et plusieurs connecteurs simples (14) montés flottants dans le boîtier (11) de connecteur, ainsi que des moyens auxiliaires d'alignement (22a, 22b, 22c ; 23a, 23b, 23c) qui sont prévus sur les boîtiers (11) de connecteur et qui, lors de l'assemblage par enfichage des connecteurs multiples (10 ;10), alignent immédiatement l'un par rapport à l'autre les boîtiers (11) de connecteur de ceux-ci, avant que les éléments d'alignement (14a) des connecteurs simples (14) coopèrent avec les éléments d'alignement (14a) des connecteurs simples du connecteur multiple situé en vis-à-vis pour aligner finement les connecteurs simples (14) à coupler,
**caractérisé en ce que**
- le système connecteur comporte un manchon d'accouplement (1) qui est conçu pour recevoir les deux boîtiers (11) de connecteur ;
- les deux boîtiers (11) de connecteur ont une configuration similaire dans la mesure où l'un des boîtiers de connecteur est équipé des mêmes moyens auxiliaires d'alignement (22a, 22b, 22c ; 23a, 23b, 23c) que l'autre boîtier (11) de connecteur ;
- les moyens auxiliaires d'alignement des boîtiers (11) de connecteur sont formés par des saillies (22a, 22b, 22c ; 23a, 23b, 23c) en forme d'ergots sur le bord (24) frontal du boîtier (11) de connecteur considéré, une pluralité de saillies (22a, 22b, 23c) en forme d'ergots longues et une pluralité de saillies (23a, 23b, 22c) en forme d'ergots plus courtes que les premières étant prévues, et
- les moyens auxiliaires d'alignement (22a, 22b, 22c ; 23a, 23b, 23c) de l'un des boîtiers (11) de connecteur sont réalisés de telle manière qu'en position d'enfichage, ils coopèrent avec les moyens auxiliaires d'alignement (22a, 22b, 22c ; 23a, 23b, 23c) de l'autre boîtier (11) de connecteur de telle sorte que les saillies (22a, 22b, 23c) en forme d'ergots longues de l'un des boîtiers (11) de connecteur coopèrent avec les saillies (23a, 23b, 22c) en forme d'ergots courtes de l'autre boîtier (11) de connecteur et inversement, l'un des boîtiers (11) de connecteur, dans la position d'enfichage, étant tourné de 180° par rapport à la même position de départ de l'autre boîtier (1) de connecteur.

2. Système connecteur selon la revendication 1,
**caractérisé en ce que** trois saillies (22a, 22b, 23c) en forme d'ergots longues et trois saillies (23a, 23b, 22c) en forme d'ergots courtes sont prévues sur chaque boîtier de connecteur, deux des saillies (22a, 22b, 23a, 23b) étant disposées sur un bord longitudinal (11a) du boîtier de connecteur et deux saillies (22c, 23c) en forme d'ergots étant disposées dans la zone centrale des faces supérieure et inférieure (11b, 11c) du boîtier (11) de connecteur.

3. Système connecteur selon la revendication 2,
**caractérisé en ce que** les saillies (23a, 23b) en forme d'ergots courtes sur les bords longitudinaux (11a) forment en coupe transversale un L à angle droit.

4. Système connecteur selon la revendication 2 ou 3,
**caractérisé en ce que** la saillie (23c) en forme d'ergot longue dans la zone centrale (11b) du boîtier de connecteur avance par rapport au boîtier (11) de connecteur et coopère avec une rainure (1d) du manchon d'accouplement (1) lors de l'introduction du boîtier (11) de connecteur.

5. Système connecteur selon au moins une des revendications précédentes,
**caractérisé en ce qu'**au moins une saillie (23a, 23b) en forme d'ergot est réalisée de telle manière qu'en interaction avec la saillie (22a, 22b) située en vis-à-vis, elle produit une limitation du déplacement du boîtier (11) de connecteur dans au moins deux degrés de liberté perpendiculaires à la direction d'enfichage (A, B).
